Europäisches Patentamt

(19) European Patent Office

Office européen des brevets

(11) **EP 0 689 669 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(21) Anmeldenummer: **94909045.0**

(22) Anmeldetag: **25.02.1994**

(51) Int Cl.$^6$: **G01L 21/12**

(86) Internationale Anmeldenummer:
**PCT/EP94/00533**

(87) Internationale Veröffentlichungsnummer:
**WO 94/21993 (29.09.1994 Gazette 1994/22)**

(54) **TEMPERATURKOMPENSATION BEI EINEM GEREGELTEN WÄRMELEITUNGSVAKUUMMETER**

TEMPERATURE COMPENSATION IN A REGULATED HEAT CONDUCTION VACUUM GAUGE

COMPENSATION THERMIQUE D'UN VACUOMETRE REGLE A CONDUCTION THERMIQUE

(84) Benannte Vertragsstaaten:
**CH DE FR GB IT LI**

(30) Priorität: **17.03.1993 DE 4308434**

(43) Veröffentlichungstag der Anmeldung:
**03.01.1996 Patentblatt 1996/01**

(73) Patentinhaber: **Balzers und Leybold Deutschland Holding Aktiengesellschaft**
**63450 Hanau (DE)**

(72) Erfinder: **SCHOROTH, Anno**
**D-53639 Königswinter (DE)**

(74) Vertreter: **Leineweber, Jürgen, Dipl.-Phys.**
**Aggerstrasse 24**
**50859 Köln (DE)**

(56) Entgegenhaltungen:
**GB-A- 2 105 472          US-A- 4 492 123**
**US-A- 4 729 242**

Printed by Jouve, 75001 PARIS (FR)

**Beschreibung**

Die Erfindung bezieht sich auf ein Verfahren zum Betrieb eines geregelten Wärmeleitungsvakuummeters mit einer von einer regelbaren Speisespannung versorgten Wheatstone'schen Brücke, deren Bestandteile u.a. ein Meßdraht und ein Widerstand sind, der zum Zwecke der Kompensation störender Einflüsse der Umgebungstemperatur des Meßdrahtes temperaturabhängig ausgebildet ist. Außerdem bezieht sich die Erfindung auf für die Durchführung dieses Verfahrens geeignete Schaltungen.

Wärmeleitungsvakuummeter nutzen die Tatsache aus, daß von einem temperaturabhängigen Widerstandselement bei höheren Gasdrücken, also größerer Teilchenzahldichte, mehr Wärme abgeführt wird als bei niedrigeren Gasdrücken. Beim Wärmeleitungsvakuummeter nach Pirani ist das temperaturabhängige Widerstandselement ein Meßdraht, der in eine Wheatstone'sche Brücke eingeschaltet ist. Beim ungeregelten Pirani-Vakuummeter bewirkt eine Widerstandsänderung des Meßdrahtes eine Verstimmung der Brücke, welche als Maß für den Druck herangezogen wird. Beim geregelten Pirani wird die an der Brücke liegende Speisespannung ständig derart geregelt, daß der Widerstand und damit die Temperatur des Meßdrahtes unabhängig von der Wärmeabgabe konstant bleiben. Der zur Konstanthaltung des Widerstandswertes benötigte Strom ist ein Maß für die Wärmeleitfähigkeit und damit für den Druck des Gases. Üblicherweise wird die Wheatstone'sche Brücke durch Nachführen der Brückenspeisespannung auf minimale Verstimmung abgeglichen. Die Brückenspeisespannung ist damit der zum Druck korrespondierende primäre elektrische Wert.

Die Umgebungstemperatur des Meßdrahtes hat auf das Meßprinzip einen störenden Einfluß, da sie über Strahlung und Wärmeleitung durch Befestigungsteile das thermische Gleichgewicht des Meßdrahtes mit seiner Umgebung mitbestimmt. Um diesen störenden Einfluß der Umgebungstemperatur zu kompensieren, ist es bekannt, in einen der Zweige der Wheatstone'schen Brücke einen temperaturabhängigen Widerstand mit geeigneter Charakteristik einzuschalten. Diese Temperaturkompensation ist jedoch unzulänglich, da sie abhängig vom Druck des Gases mit unterschiedlichen Chrakteristiken erfolgen müßte. Üblicherweise wird die Charakteristik so gewählt, daß eine Optimierung bei Atmosphärendruck vorliegt. Bei kleinen Drücken tritt deshalb zwangsläufig eine Fehlkompensation ein.

Aus der DE-PS 32 30 405 ist es bekannt, dem temperaturabhängigen Widerstand in der Wheatstone'schen Brücke einen weiteren temperaturabhängigen Widerstand zuzuordnen, der nicht Bestandteil der Brücke ist und der mit einer konstanten Spannung versorgt wird. Diese Lösung erfordert neben dem weiteren temperaturabhängigen Bauteil in der Meßzelle noch die zusätzliche Konstantspannungsversorgung, die eine zusätzliche Verbindungsleitung zwischen der Meßzelle und dem Meßgerät notwendig macht.

Der vorliegenden Erfindung liegt die Aufgabe zugrunde, die Temperaturkompensation beim Betrieb von geregelten Wärmeleitungsvakuummetern zu verbessern bzw. zu vereinfachen.

Bei einem Betriebsverfahren der eingangs erwähnten Art wird diese Aufgabe dadurch gelöst, daß durch Verknüpfung der über dem temperaturabhängigen Widerstand abfallenden Spannung mit der Brückenspeisespannung oder dem durch den temperaturabhängigen Widerstand fließenden Strom der Wert oder die Temperatur des temperaturabhängigen Widerstandes ermittellt und bei der Bildung der Druckmeßwerte berücksichtigt wird. Der bei den vorbekannten Lösungen stets unberücksichtigt gebliebene absolute Wert des temperaturabhängigen Widerstandes erlaubt laufend die Bildung von Korrektursignalen, die die Temperaturabhängigkeit berücksichtigen und deshalb zur Bildung exakter Meßwerte herangezogen werden können. Zusätzliche Bauteile in der Meßzelle und eine zusätzliche Konstantspannungsversorgung für die Meßzelle sind nicht erforderlich.

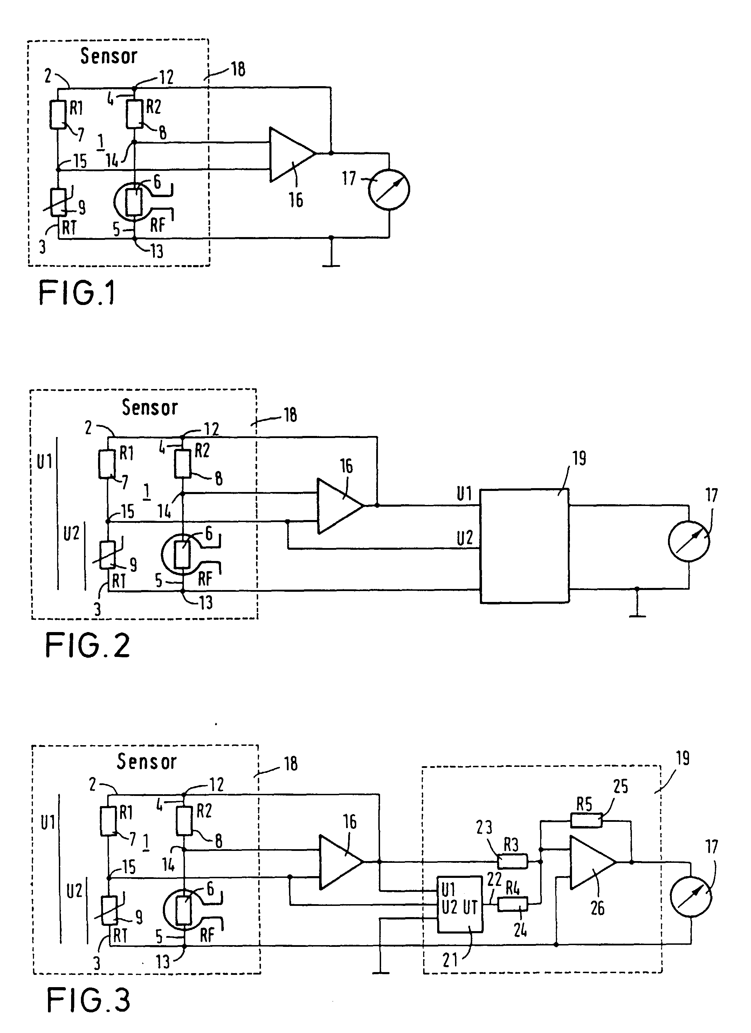

Weitere Vorteile und Einzelheiten der Erfindung sollen anhand der Figuren 1 bis 7 erläutert werden, von denen Figur 1 eine Schaltung nach dem Stand der Technik und die Figuren 2 bis 7 Ausführungsbeispiele für Schaltungen nach der Erfindung zeigen.

Die in Figur 1 dargestellte Schaltung umfaßt die Wheatstone'sche Brücke 1 mit ihren Zweigen 2 bis 5. In diesen Zweigen befinden sich der Meßdraht 6 ($R_F$) und die Widerstände 7 ($R_1$), 8 ($R_2$) und 9 ($R_T$). In den Zweigen befinden sich die Abgriffe 12 bis 15, wobei die Abgriffe 12, 13 die Speisediagonale und die Abgriffe 14, 15 die Meßdiagonale bilden. An den Abgriffen 12 und 13 liegt die geregelte Speisespannung $U_1$ (vgl. Fig. 2) an, wobei Abgriff 13 auf Erdpotential liegt. Die Abgriffe 14, 15 der Meßdiagonalen sind mit dem Verstärker 16 verbunden, mit dessen Hilfe die Speisespannung $U_1$ ständig derart geregelt wird, daß der Widerstand des Meßdrahtes $R_F$ (und damit seine Temperatur) unabhängig von der Wärmeabgabe konstant bleibt. Zur Anzeige des Druckes, der der Speisespannung entspricht, ist in bekannter Weise das Anzeigegerät 17 vorgesehen.

Die Wheatstone'sche Brücke 1 mit ihrem in einem geeigneten Gehäuse angeordneten Meßdraht 6 bilden den Drucksensor bzw. die Meßzelle 18. Die weiteren nicht sämtlich dargestellten Bauteile (Versorgung, Verarbeitung, Anzeige usw.) sind Bestandteil eines mit der Meßzelle über ein Kabel verbundenen Meßgerätes.

Figur 2 zeigt eine Schaltung nach der Erfindung in einer sehr allgemeinen Form. Zur Bildung des Meßwertes dient ein Baustein 19, der es erlaubt, den momentanen Wert des temperaturabhängigen Widerstandes 9 bei der Meßwertbildung zu berücksichtigen. Dieses geschieht dadurch, daß dem Baustein 19 geeignete Informationen (beispielsweise die Spannungssignale $U_1$, geregelte Speisespannung, und $U_2$, Spannungsabfall über dem temperaturabhängigen Widerstand 9, oder auch Informationen über fließende Ströme) zugeführt werden. Diese Informationen reichen aus, um entweder mittelbar (über die Bildung eines Spannungssignales, das der Temperatur des Widerstandes 9 entspricht) oder unmittelbar (Auswertung der Informationen in einem Computerbaustein ohne gesonderte Ermittlung der Umgebungstemperatur) die gewünschte druckabhängige Temperaturkompensation zu erzielen.

Figur 3 zeigt eine Ausführungsmöglichkeit für den Baustein 19. Er umfaßt seinerseits ein Schaltungsteil 21, der die zwischen den Abgriffen 12 und 13 liegende Brückenversorgungsspannung $U_1$ und die am temperaturabhängigen Widerstand $R_T$ (9) anliegende Spannung $U_2$ dergestalt verarbeitet, daß an dessen Ausgang 22 eine temperaturabhängige Spannung $U_T$ entsteht, die in einem weiteren Schaltungsteil - bestehend aus $R_3$ (23), $R_4$ (24), $R_5$ (25) und einem Verstärker (26) - der als Meßgröße dienenden Brückenversorgungsspannung $U_1$ geeignet überlagert wird. Die resultierende Spannung wird dem in Gasdruckwerten geeichten Meßgerät 17 zugeführt.

Wenn $U_T$ der Temperatur und damit dem temperaturabhängigen Widerstand $R_T$ proportional sein soll, muß gelten:

$$\text{(Gl. 1)} \qquad U_T = K_1 \bullet R_T \text{ mit } K_1 = \text{Proportionalitätsfaktor}$$

Aus den zur Verfügung stehenden Spannungen $U_1$ und $U_2$ läßt sich $R_T$ ermitteln zu

$$\text{(Gl. 2)} \qquad R_T = R_1 \bullet \frac{U_2}{U_1 - U_2} \text{ mit } R_1 = \text{Konst.}$$

Damit ergibt sich

$$\text{(Gl. 3)} \qquad U_T = K_2 \bullet \frac{U_2}{U_1 - U_2} ; K_2 = \text{Proportionalitätsfaktor}$$

Der temperaturabhängige Widerstand $R_T$ wird bekanntermaßen so gewählt, daß er Temperaturänderungen an einem Punkt des Druckbereiches (i.a. Atmosphärendruck) des zugehörigen Pirani-Meßgerätes genau kompensiert. Der Widerstand $R_4$ (24) wird unter Berücksichtigung von $R_3$ (23) und $R_5$ (25) so gewählt, daß an einem zweiten Punkt des Druckbereiches, insbesondere bei sehr kleinen Drücken (untere Meßbereichsgrenze, "Nullpunkt") die Korrekturspannung $U_T$ den Temperatureinfluß kompensiert. Durch diese Maßnahmen wird eine gasdruckabhängige Temperaturkompensation über den gesamten Meßbereich erreicht.

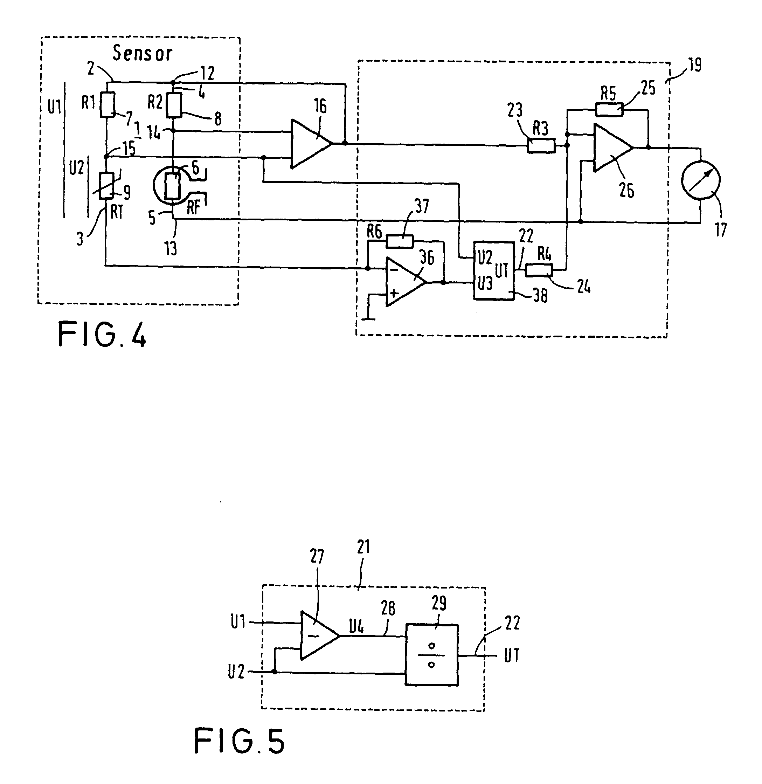

Beim Ausführungsbeispiel nach Figur 4 wird der Wert des temperaturabhängigen Widerstandes 9 aus den Werten $U_2$ (Spannungsabfall über $R_T$) und I (Strom durch den Widerstand $R_T$) ermittelt. Dazu ist ein Strom/Spannungswandler mit dem Verstärker 36 und dem Widerstand 37 ($R_6$) vorgesehen. In den einen Eingang des Verstärkers 36 fließt der dvrch den temperaturabhängigen Widerstand 9 fließende Strom. Der zweite Eingang des Verstärkers ist geerdet. Am Ausgang des Verstärkers liegt ein Spannungssignal $U_3$ an, das der Stärke des durch den Widerstand 9 fließenden Stromes entspricht. Aus dem Spannungsabfall $U_2$ über dem Widerstand 9 und dem Wert $U_3$ für den durch den Widerstand 9 fließenden Strom kann durch Verknüpfung nach dem Ohm'schen Gesetz der Wert des Widerstandes ermittelt werden. Dieses geschieht im Baustein 38, welcher die temperaturabhängige Korrekturspannung $U_T$ liefert.

Aus $U_2$ und mit dem im Zweig 3 fließenden Strom $I = -\frac{U_3}{R_6}$ folgt

$$\text{(Gl. 2')} \qquad R_T = -\frac{U_2}{U_3} \cdot R_6$$

$$\text{(Gl. 3')} \qquad U_T = K'_2 \cdot \frac{U_2}{U_3}$$

Die Spannung $U_T$ wird in der bereits zu Figur 3 beschriebenen Weise bei der Bildung des Druckmeßwertes berücksichtigt.

Eine weitere Ausführung des Schaltungsteiles 21 nach Figur 3 zur Erzeugung der temperaturabhängigen Korrekturspannung $U_T$ zeigt Figur 5. In einer Summierschaltung 27 wird die Spannung $U_2$ von der Spannung $U_1$ subtrahiert und man erhält die Spannung $U_4$ (28). Die Spannung $U_2$ wird anschließend in einer Dividierschaltung 29 durch die Spannung $U_3$ dividiert und mit dem Faktor $K_2$ bewertet. Die Spannung am Ausgang 22 ist die gewünschte Korrekturspannung $U_T$.

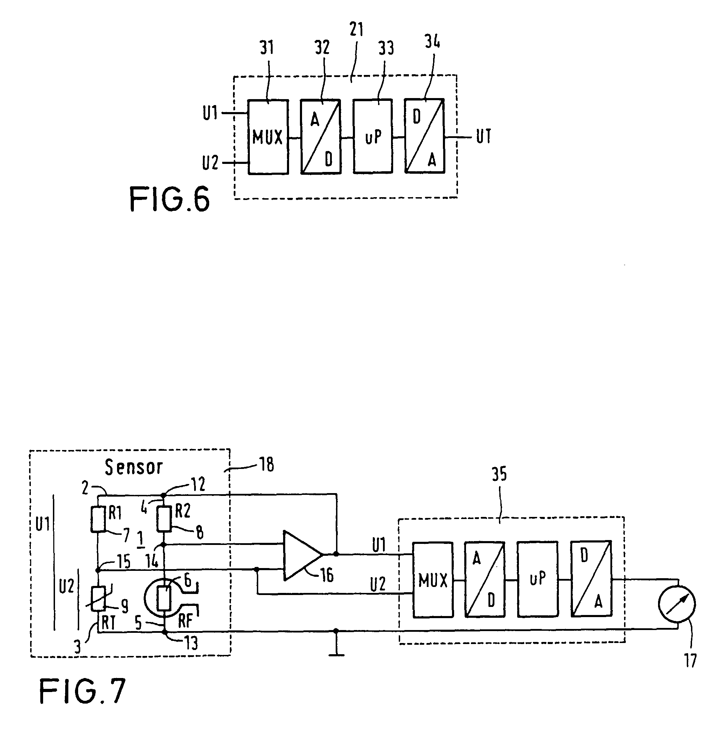

Die zu Figur 5 beschriebene Realisierung der Erzeugung von $U_T$ aus $U_1$ und $U_2$ durch diskrete Bauelemente läßt sich vorteilhafterweise auch durch einen Computerbaustein mit einem Mikroprozessor (33), Multiplexer (31), A/D-(32) und D/A-Funktionen (34) sowie entsprechender Software nach obiger Gleichung 1 ersetzen. Figur 6 zeigt einen Baustein 21 dieser Art.

In einem weiteren Schritt (Figur 7) bietet es sich an, die gesamte Signalverarbeitung - insbesondere also auch die gewichtete Überlagerung der Meßgröße $U_1$ (BrückenversorgungsSpannung) und der Korrekturspannung $U_T$ - mittels eines Computerbausteins 35 durchzuführen. Dieser umfaßt zweckmäßig ebenfalls Mikroprozessor, Multiplexer sowie A/D- und D/A-Funktionen. Die Software muß entsprechend angepaßt sein. In diesem Fall kann ebenfalls - da über $U_1$ und $U_2$ sowohl die Umgebungstemperatur als auch die Brückenspannung dem Computerbaustein bekannt sind - eine Temperaturkompensation über den gesamten Druckmeßbereich realisiert werden. Dazu werden die Zusammenhänge zwischen gemessener Brückenspannung, Temperatur und "wahrem" Druck einmalig experimentell ermittelt. Dann kann in den Pirani-Betriebsgeräten durch Softwareroutinen über Tabellen und/oder Näherungsgleichungen aus den Eingangsgrößen $U_1$ und $U_2$ der "wahre" Druck berechnet werden.

Bei den Ausführungen nach den Figuren 2 bis 3 und 5 bis 7 sind die zur Erzielung der verbesserten Temperaturkompensation notwendigen Änderungen auf das Meßgerät beschränkt. Vorhandene Meßzellen können deshalb mit modifizierten Meßgeräten betrieben werden. Beim Ausführungsbeispiel nach Figur 4 ist zwar noch eine zusätzliche Leitung zwischen Meßgerät und Sensor erforderlich; die Genauigkeit der Temperaturkompensation ist jedoch gegenüber dem durch die DE-PS 32 30 405 gegebenen Stand der Technik, bei dem ebenfalls eine zusätzliche Verbindungsleitung vorhanden sein muß, wesentlich verbessert.

**Patentansprüche**

1. Verfahren zum Betrieb eines geregelten Wärmeleitungsvakuummeters mit einer von einer regelbaren Speisespannung ($U_1$) versorgten Wheatstone'schen Brücke (1), deren Bestandteile unter anderem ein Messdraht (6) und ein Widerstand (9) sind, der zum Zweck der Kompensation störender Einflüsse der Umgebungstemperatur des Messdrahtes (6) temperaturabhängig ausgebildet ist, <u>dadurch gekennzeichnet,</u> dass durch Verknüpfung der über dem temperaturabhängigen Widerstand (9) abfallenden Spannung ($U_2$) mit der Brückenspeisespannung ($U_1$) oder dem durch den temperaturabhängigen Widerstand (9) fließenden Strom der Wert oder die Temperatur des temperaturabhängigen Widerstandes (9) ermittelt und bei der Bildung der Druckmesswerte berücksichtigt wird.

2. Verfahren nach Anspruch 1, <u>dadurch gekennzeichnet,</u> dass der Brückenspeisespannung ($U_1$) zur Bildung der Druckmesswerte ein Spannungssignal ($U_T$) überlagert wird, das der Temperatur des temperaturabhängigen Widerstandes (9) entspricht.

3. Verfahren nach Anspruch 2, <u>dadurch gekennzeichnet,</u> dass zur Bildung des Spannungssignales ($U_T$) zunächst die über dem temperaturabhängigen Widerstand (9) abfallende Spannung ($U_2$) von der Brückenspeisespannung ($U_1$) subtrahiert wird und dass danach die über den temperaturabhängigen Widerstand (9) abfallende Spannung ($U_2$) durch das Ergebnis ($U_3$) dieser Subtraktion dividiert wird.

4. Verfahren nach Anspruch 2, <u>dadurch gekennzeichnet,</u> dass zur Bildung des Spannungssignales ($U_T$) die über dem temperaturabhängigen Widerstand (9) abfallende Spannung ($U_2$) und der durch den temperaturabhängigen Widerstand (9) fließende Strom ermittelt wird und danach durch Verknüpfung der ermittelten Werte nach dem Ohm'schen Gesetz ein dem Wert des temperaturabhängigen Widerstandes (9) entsprechendes Spannungssignal ($U_T$) erzeugt wird.

5. Verfahren nach Anspruch 2, <u>dadurch gekennzeichnet,</u> dass die Bildung des Spannungssignales ($U_T$), der dem Widerstand des temperaturabhängigen Widerstandes (9) entspricht, in einem Computerbaustein (21) mit einem Mikroprozessor (33), Multiplexer (31), A/D- (32) und D/A-Funktionen (34) sowie entsprechender Software erfolgt.

6. Verfahren nach Anspruch 1, <u>dadurch gekennzeichnet,</u> dass die Bildung der Druckmesswerte in einem Computerbaustein (35) mit Mikroprozessor, Multiplexer, A/D- und D/A-Funktionen erfolgt, dem die Werte der Speisespannung ($U_1$) und der über den temperaturabhängigen Widerstand (9) abfallenden Spannung ($U_2$) zugeführt werden.

7. Schaltung zur Durchführung eines Verfahrens zum Betrieb eines geregelten Wärmeleitungsvakuummeters mit einer von einer regelbaren Speisespannung versorgten Wheatstone'schen Brücke (1), deren Bestandteile unter anderem ein Messdraht (6) und ein Widerstand (9) sind, der zum Zwecke der Kompensation störender Einflüsse der Umgebungstemperatur des Messdrahtes (6) temperaturabhängig ausgebildet ist, mit einem Verstärker (16) zur Regelung der Brückenspeisespannung ($U_1$) sowie mit Mitteln, um die Brückenspeisespannung ($U_1$) und die über dem temperaturabhängigen Widerstand (9) abfallende Spannung ($U_2$) zu ermitteln, <u>dadurch gekennzeichnet,</u> dass sie mit Schaltungsbausteinen (21 bis 26 oder 35) ausgerüstet ist, die die Brückenspeisespannung ($U_1$) und die über dem temperaturabhängigen Widerstand (9) abfallende Spannung ($U_2$) zu einem temperaturkompensierten Messwert verarbeiten.

**8.** Schaltung nach Anspruch 7, <u>dadurch gekennzeichnet,</u> dass ein Baustein (21) vorgesehen ist, der aus der Brückenspeisespannung ($U_1$) und der über den temperaturabhängigen Widerstand (9) abfallenden Spannung ($U_1$) ein Spannungssignal ($U_T$) bildet, das der Temperatur des temperaturabhängigen Widerstandes (9) entspricht, und dass weitere elektronische Bausteine (23 bis 26) zur Überlagerung der Brückenspeisespannung ($U_1$) und des Spannungssignales ($U_T$) zur Bildung eines temperaturkompensierten Messsignales vorgesehen sind.

**9.** Schaltung nach Anspruch 8, <u>dadurch gekennzeichnet,</u> dass Bestandteile des Bausteines (21) eine Subtraktionsstufe (27) und eine Dividierschaltung (29) sind.

**10.** Schaltung nach Anspruch 8, <u>dadurch gekennzeichnet,</u> dass Bestandteile des Bausteines (21) ein Mikroprozessor (33), Multiplexer (31, A/D- (32) und D/A-Funktionen (34) sind.

**11.** Schaltung nach Anspruch 7, <u>dadurch gekennzeichnet,</u> dass zur Bildung des Messwertes aus der Brückenspeisespannung ($U_1$) und der über den temperaturabhängigen Widerstand (9) abfallenden Spannung ($U_2$) ein Computerbaustein (35) vorgesehen ist, der einen Mikroprozessor, einen Multiplexer sowie A/D- und D/A-Funktionen umfasst.

**12.** Schaltung zur Durchführung eines Verfahrens zum Betrieb eines geregelten Wärmeleitungsvakuummeters mit einer von einer regelbaren Speisespannung ($U_1$) versorgten Wheatstone'schen Brücke (1), deren Bestandteile unter anderem ein Messdraht (6) und ein Widerstand (9) sind, der zum Zwecke der Kompensation störender Einflüsse der Umgebungstemperatur des Messdrahtes (6) temperaturabhängig ausgebildet ist, mit einem Verstärker (16) zur Regelung der Speisespannung ($U_1$) sowie mit Mitteln, um die Brückenspeisespannung ($U_1$) und die über dem temperaturabhängigen Widerstand (9) abfallende Spannung ($U_2$) zu ermitteln, <u>dadurch gekennzeichnet,</u> dass sie einen Strom/Spannungswandler (36, 37) zur Registrierung des durch den temperaturabhängigen Widerstand (9) fließenden Stromes und einen Baustein (38) umfasst, der der Bildung eines dem Wert des temperaturabhängigen Widerstandes (9) entsprechenden Signales ($U_T$) aus dem durch den temperaturabhängigen Widerstand (9) fließenden Strom und aus der über dem temperaturabhängigen Widerstand (9) abfallenden Spannung dient.

## Claims

**1.** A process for operating a regulated thermal conductivity vacuum gauge comprising a Wheatstone bridge (1) which is supplied with a regulatable supply voltage ($U_1$) and the components of which include a measuring wire (6) and a resistor (9) is designed to be temperature-dependent for the purpose of compensating disturbing influences of the environmental temperature of the measuring wire (6), characterised in that by combining the voltage ($U_2$) falling across the temperature-dependent resistor (9) with the bridge supply voltage ($U_1$) or the current flowing through the temperature-dependent resistor (9), the value or temperature of the temperature-dependent resistor (9) is determined and taken into consideration in the formation of the pressure measured values.

**2.** A process according to Claim 1, characterised in that for the formation of the pressure measured values a voltage signal ($U_T$) corresponding to the temperature of the temperature-dependent resistor (9) is superimposed upon the bridge supply voltage ($U_1$).

**3.** A process according to Claim 2, characterised in that for the formation of the voltage signal ($U_T$) firstly the voltage ($U_2$) falling across the temperature-dependent resistor (9) is subtracted from the bridge supply voltage ($U_1$) and that then the voltage ($U_2$) falling across the temperature-dependent resistor (9) is divided by the result ($U_3$) of this subtraction.

**4.** A process according to Claim 2, characterised in that for the formation of the voltage signal ($U_T$) the voltage ($U_2$) falling across the temperature-dependent resistor (9) and the current flowing through the temperature-dependent resistor (9) is determined and then by combining the determined values in accordance with Ohm's law a voltage signal ($U_T$) corresponding to the value of the temperature-dependent resistor (9) is generated.

5. A process according to Claim 2, characterised in that the formation of the voltage signal ($U_T$), which corresponds to the resistance of the temperature-dependent resistor (9), takes place in a computer module (21) comprising a microprocessor (33), multiplexer (31), A/D- (32) and D/A-functions (34), together with corresponding software.

6. A process according to Claim 1, characterised in that the formation of the pressure measured values takes place in a computer module (35) comprising microprocessor, multiplexer, A/D- and D/A- functions, which computer module (35) is supplied with the values of the supply voltage ($U_1$) and of the voltage ($U_2$) falling across the temperature-dependent resistor (9).

7. A circuit for the implementation of a process for operating a regulated thermal conductivity vacuum gauge comprising a Wheatstone bridge (1) which is supplied with a regulatable supply voltage and the components of which include a measuring wire (6) and a resistor (9) designed to be temperature-dependent for the purpose of compensating disturbing influences of the environmental temperature of the measuring wire (6), comprising an amplifier (16) for regulating the bridge supply voltage ($U_1$), and comprising means for determining the bridge supply voltage ($U_1$) and the voltage ($U_2$) falling across the temperature-dependent resistor (9), characterised in that it is equipped with circuit modules (21 to 26 or 35) which process the bridge supply voltage ($U_1$) and the voltage ($U_2$) falling across the temperature-dependent resistor (9) to form a temperature-compensated measured value.

8. A circuit according to Claim 7, characterised in that a module (21) is provided which, from the bridge supply voltage ($U_1$) and the voltage ($U_2$) falling across the temperature-dependent resistor (9), forms a voltage signal ($U_T$) which corresponds to the temperature of the temperature-dependent resistor (9), and that further electronic modules (23 to 26) are provided for the superimposition of the bridge supply voltage ($U_1$) and the voltage signal ($U_T$) to form a temperature-compensated measurement signal.

9. A circuit according to Claim 8, characterised in that components of the module (21) comprise a subtraction stage (27) and a divider circuit (29).

10. A circuit according to Claim 8, characterised in that components of the module (21) comprise a microprocessor (33), multiplexer (31), A/D- (32) and D/A- functions (34).

11. A circuit according to Claim 7, characterised in that a computer module (35) comprising a microprocessor, a multiplexer, and A/D- and D/A- functions is provided for forming the measured value from the bridge supply voltage ($U_1$) and the voltage ($U_2$) falling across the temperature-dependent resistor (9).

12. A circuit for the implementation of a process for operating a regulated thermal conductivity vacuum gauge comprising a Wheatstone bridge (1) which is supplied with a regulatable supply voltage ($U_1$) and the components of which include a measuring wire (6) and a resistor (9) designed to be temperature-dependent for the purpose of compensating disturbing influences of the environmental temperature of the measuring wire (6), comprising an amplifier (16) for regulating the supply voltage ($U_1$) and comprising means for determining the bridge supply voltage ($U_1$) and the voltage ($U_2$) falling across the temperature-dependent resistor (9), characterised in that it comprises a current/voltage converter (36, 37) for recording the current flowing through the temperature-dependent resistor (9) and a module (38) which serves to form a signal ($U_T$) corresponding to the value of the temperature-dependent resistor (9) from the current flowing through the temperature-dependent resistor (9) and from the voltage falling across the temperature-dependent resistor (9).

**Revendications**

1. Procédé de fonctionnement d'une jauge à vide à conduction thermique régulée, équipée d'un pont de Wheatstone (1) alimenté par une tension d'alimentation réglable ($U_1$), dont les constituants sont entre autres un fil de mesure (6) et une résistance (9), qui est sensible à la température dans le but de la compensation d'influences perturbatrices de la température de l'environnement du fil de mesure (6), caractérisé en ce que, par combinaison de la chute de tension ($U_2$) due à la résistance (9) sensible à la température et de la tension d'alimentation du pont ($U_1$), grâce au courant circulant à travers la résistance (9) sensible à la température, est détectée la valeur ou la température de la résistance (9) sensible à la température et est prise en compte lors de la formation des valeurs de mesure de pression.

2. Procédé selon la revendication 1, caractérisé en ce qu'à la tension d'alimentation du pont ($U_1$) est superposé un

signal de tension ($U_T$) en vue de la formation des valeurs de mesure de pression, qui correspond à la température de la résistance (9) sensible à la température.

3. Procédé selon la revendication 2, caractérisé en ce qu'en vue de la formation du signal de tension ($U_T$), la chute de tension ($U_2$) due à la résistance (9) sensible à la température est retranchée à la tension d'alimentation du pont ($U_1$) et en ce qu'ensuite la chute de tension ($U_2$), due à la résistance (9) sensible à la température, est divisée par le résultat ($U_3$) de cette soustraction.

4. Procédé selon la revendication 2, caractérisé en ce qu'en vue de la formation du signal de tension ($U_T$), la chute de tension ($U_2$) due à la résistance (9), sensible à la température et au courant circulant à travers la résistance (9) sensible à la température, est détectée et ensuite par combinaison des valeurs obtenues selon la loi d'Ohm est généré un signal de tension ($U_T$) correspondant à la valeur de la résistance (9) sensible à la température.

5. Procédé selon la revendication 2, caractérisé en ce que la formation du signal de tension ($U_T$), qui correspond à la valeur ohmique de la résistance (9) sensible à la température, s'effectue dans un composant de calculateur (21) avec un microprocesseur (33), un multiplexeur (31), un convertisseur analogique/numérique (32) et numérique/ analogique (34) ainsi qu'un logiciel correspondant.

6. Procédé selon la revendication 1, caractérisé en ce que la formation des valeurs de mesure de pression s'effectue dans un composant de calculateur (35) avec un microprocesseur, un multiplexeur et des convertisseurs analogique/numérique et numérique/analogique, auquel sont appliquées les valeurs de la tension d'alimentation ($U_1$) et de la chute de tension ($U_2$) due à la résistance (9) sensible à la température.

7. Circuit de mise en oeuvre d'un procédé de fonctionnement d'une jauge à vide à conduction thermique régulée, équipée d'un pont de Wheatstone (1) alimenté par une tension d'alimentation réglable, dont les constituants sont entre autres un fil de mesure (6) et une résistance (9), qui est sensible à la température dans le but de la compensation d'influences perturbatrices de la température environnante du fil de mesure (6), d'un amplificateur (16) en vue de la régulation de la tension d'alimentation du pont ($U_1$) ainsi que de moyens, afin de détecter la tension d'alimentation du pont ($U_1$) et la chute de tension ($U_2$) due à la résistance (9) sensible à la température, caractérisé en ce qu'il est équipé de composants de circuits (21 à 26 ou 35), qui transforment la tension d'alimentation du pont ($U_1$) et la chute de tension ($U_2$) due à la résistance (9) sensible à la température en une valeur de mesure compensée en température.

8. Circuit selon la revendication 7, caractérisé en ce qu'un composant (21) est prévu, qui forme, à partir de la tension d'alimentation du pont ($U_1$) et de la chute de tension ($U_2$) due à la résistance (9) sensible à la température, un signal de tension ($U_T$), qui correspond à la température de la résistance (9) sensible à la température, et en ce que d'autres composants électroniques (23 à 26) sont prévus en vue de la superposition de la tension d'alimentation du pont ($U_1$) et du signal de tension ($U_T$) en vue de la formation d'un signal de mesure compensé en température.

9. Circuit selon la revendication 8, caractérisé en ce que des constituants du composant (21) sont un étage de soustraction (27) et un circuit de division (29).

10. Circuit selon la revendication 8, caractérisé en ce que des constituants du composant (21) sont un microprocesseur (33), un multiplexeur (31), et des convertisseurs analogique/numérique (32) et numérique/analogique (34).

11. Circuit selon la revendication 7, caractérisé en ce qu'en vue de la formation de la valeur de mesure à partir de la tension d'alimentation du pont ($U_1$) et de la chute de tension ($U_2$) due à la résistance (9) sensible à la température, est prévu un composant de calculateur (35) qui comprend un microprocesseur, un multiplexeur ainsi que des convertisseur analogique/numérique et numérique/analogique.

12. Circuit de mise en oeuvre d'un procédé de fonctionnement d'une jauge à vide à conduction thermique régulée, équipée d'un pont de Wheatstone (1) alimenté par une tension d'alimentation ($U_1$) réglable, dont les constituants sont entre autres un fil de mesure (6) et une résistance (9), qui est sensible à la température en vue de la compensation d'influences perturbatrices de la température environnante du fil de mesure (6), d'un amplificateur (16) de régulation de la tension d'alimentation ($U_1$) ainsi que de moyens, afin de détecter la tension d'alimentation du pont ($U_1$) et la chute de tension ($U_2$) due la résistance (9) sensible à la température, caractérisé en ce qu'il comporte un convertisseur courant/tension (36, 37) en vue du réglage du courant circulant à travers la résistance (9) sensible à la température et un composant (38), qui sert à la formation d'un signal ($U_T$) correspondant à la valeur de la résistance (9) sensible à la température à partir du courant circulant à travers la résistance (9) sensible à la température et à partir de la chute de tension due à la résistance (9) sensible à la température.

FIG.1

FIG.2

FIG.3

FIG. 4

FIG. 5

FIG.6

FIG.7